(19) Europäisches Patentamt
European Patent Office
Office européen des brevets

(11) **EP 0 971 080 B1**

(12) **EUROPÄISCHE PATENTSCHRIFT**

(45) Veröffentlichungstag und Bekanntmachung des Hinweises auf die Patenterteilung:
**07.07.2004 Patentblatt 2004/28**

(51) Int Cl.⁷: **E04B 1/86**, E01B 19/00, B32B 5/26, B32B 33/00

(21) Anmeldenummer: **99108537.4**

(22) Anmeldetag: **04.05.1999**

(54) **Schallabsorbierende Verbundplatte und ihre Verwendung**

Sound-insulating composite panel and use thereof

Panneau composé insonorisant et son utilisation

(84) Benannte Vertragsstaaten:
**AT CH DE LI**

(30) Priorität: **10.07.1998 AT 46898 U**

(43) Veröffentlichungstag der Anmeldung:
**12.01.2000 Patentblatt 2000/02**

(73) Patentinhaber: **Heraklith AG**
**9586 Fürnitz (AT)**

(72) Erfinder: **Sollerer, Gregor**
**6330 Schwoich (Kufstein) (AT)**

(74) Vertreter: **Becker, Thomas, Dr., Dipl.-Ing. et al**
**Patentanwälte**
**Becker & Müller,**
**Turmstrasse 22**
**40878 Ratingen (DE)**

(56) Entgegenhaltungen:
**EP-A- 0 464 618**　　　**EP-A- 0 585 626**
**DE-A- 2 257 745**

**Beschreibung**

Die Erfindung betrifft eine schallabsorbierende Verbundplatte gemäß Oberbegriff von Anspruch 1 und deren Verwendung. Eine solche Verbundplatte wird seit Jahren von der Anmelderin hergestellt und vertrieben. Sie findet beispielsweise als akustisch und wärmetechnisch wirksame Deckenplatte Anwendung. (s.a. AT 001 675 U1).

Die EP 464 618 A2 beschreibt ähnliche Verbundplatten aus Mineralfaserkern und Holzwollebeschichtung, wobei die Verklebung zur Verbesserung der Schallabsorption nur partiell erfolgt. Zu einem anderen Zweck, namlich der Staubverringerung, wird in der EP 585 626 A1 die Beschichtung einer Mineralfasermatte mit Synthesefaservliesstoffen angeregt.

Ausgehend von diesem Stand der Technik liegt der Erfindung die Aufgabe zugrunde, eine Verbundplatte anzubieten, die hinsichtlich ihres Schallabsorptionsgrades verbessert ist und insbesondere als "hochschallabsorbierend" eingestuft werden kann.

Der Erfindung liegt die Erkenntnis zugrunde, daß sich die Schallabsorption der eingangs genannten Verbundplatte nachhaltig dadurch steigern läßt, wenn die Fasermatte auf einer Seite mit einer Holzwolle-Dämmplatte und auf der anderen Seite mit einem Vlies bestückt ist. Dabei sind sowohl die HolzwolleDämmplatte als auch das Vlies auf die entsprechenden Oberflächen der Fasermatte aufgeklebt.

Wie nachstehend anhand eines Ausführungsbeispieles noch im einzelnen dargestellt wird, kann eine solche Verbundplatte als schalltechnisch "hochabsorbierend" eingestuft werden.

Die Fasermatte, die im Rahmen der Verbundplatte den Kern bildet, kann aus Mineralfasern bestehen. Sie kann aber ebenso auch aus Glasfasern oder pflanzlichen oder tierischen Fasern aufgebaut sein. Der Begriff Fasermatte schließt im übrigen den Begriff Faserplatte ein.

Die Holzwolle-Dämmplatte besteht aus Holzwollefasern, die beispielsweise durch ein mineralisches Bindemittel, beispielsweise ein Bindemittel auf magnesitischer Basis oder auf Zementbasis, untereinander verbunden sind.

Als Vlies für die zweite Deckschicht eignet sich beispielsweise ein Glasvlies. Das Glasvlies kann aus versponnenen Glasfaserelementen bestehen, die zu einer irregulären Lage zueinander in einer Schicht angeordnet sind und die untereinander mittels eines mineralischen Bindemittels unter Ausbildung einer porigen Oberflächenstruktur der Deckschicht gebunden sind. Eine solche Deckschicht ist beispielsweise aus der DE 35 40 455 C2 zusammen mit einer Deckschicht aus Mineralwolle oder Glaswolle bekannt.

Gegenüber diesem Stand der Technik unterscheidet sich die erfindungsgemäße Verbundplatte durch eine auf der gegenüberliegenden Seite der Fasermatte angeordnete Deckschicht aus einer Holzwolle-Dämmplatte, die das Schallabsorptionsvermögen der Verbundplatte insgesamt charakteristisch verbessert.

Die schallabsorbierenden Eigenschaften der Verbundplatte sind selbstverständlich auch abhängig von der Dicke der Verbundplatte insgesamt sowie der Abstimmung der Dicken der einzelnen Schichten.

Nach einer Ausführungsform beträgt die Dicke der Fasermatte 45-70 %, die Dicke der Holzwolle-Dämmplatte 25-50 % und die Dicke des Vlieses 1-8 % der Gesamtdicke.

Nach einer Ausführungsform liegen die Dickenwerte für die Fasermatte bei 53-62 %, für die Holzwolle-Dämmplatte bei 35-45 % und für das Vlies bei 1-4 %.

Die Gesamtdicke der Verbundplatte sollte zwischen 30 und 60 mm liegen, wobei Werte zwischen 35 und 50 mm in der Regel ausreichend sind.

Die Deckschichten werden auf der Kernschicht verklebt, wobei die Verklebung beispielsweise vollflächig erfolgt. Zum Aufkleben der Holzwolle-Dämmplatte und des Vlieses eignen sich beispielsweise Dispersionskleber.

Aufgrund der nachstehend näher beschriebenen Schallabsorption seigenschaften eignet sich die beschriebene Verbundplatte in besonderer Weise als Schallschluckplatte in Tunneln, insbesondere Eisenbahn-Tunneln. Dazu wird die Verbundplatte zwischen den Schienen verlegt, und zwar mit der Holzwolle-Dämmplatte nach oben. Dabei können die einzelnen Verbundplatten an ihren Stoßkanten falzartig konfektioniert sein, um so einen kontinuierlichen Verbundweg auszubilden.

Um die Begehbarkeit zu verbessern, kann auf die Holzwolle-Deckschicht zusätzlich ein Drahtgeflecht oder ein Gitterrost aufgelegt werden.

Nachstehend wird die Erfindung anhand eines Ausführungsbeispieles näher erläutert.

Dabei zeigt die einzige Figur -in schematisierter Darstellungeine perspektivische Teilansicht einer erfindungsgemäßen schallabsorbierenden Verbundplatte.

Diese besteht aus einem 26mm dicken Kern 1 aus Mineralfasern, einer unteren, 1mm starken Deckschicht 2 aus einem Glasvlies und einer oberen, 18mm dicken Deckschicht 3 aus einer Holzwolle-Dämmplatte.

An derartigen Platten wurden Messungen des Schallabsorptionsgrades gemäß ÖNORM EN 20354 durchgeführt und eine Ermittlung des Kennwertes $\Delta L_{A,\alpha Str}$ nach ZTV-LSW 88 (...) vorgenommen.

Die Platten hatten eine Größe von 200 x 60 x 4,5 cm (Länge, Breite, Dicke) und wurden in einem Hallraum auf den Boden aufgelegt und in einem Rahmen aus Dreikanthölzern entsprechend der Gesamtdicke von 4,5 cm eingebaut, wobei auftretende Randfugen zum Holz verkittet wurden.

Der Hallraum hatte ein Volumen von 180 m³. Zur Erzielung eines diffusen Schallfeldes wurden Diffusoren unterschiedlicher Größe gemäß ÖNORM EN 20354 regellos angebracht.

Durch das Einbringen des Prüfmaterials verringert sich die Nachhallzeit im Raum. Aus dem Unterschied der Nachhallzeiten im leeren Hallraum und im Hallraum mit eingebautem Prüfmaterial wurde der Schallabsorptionsgrad wie folgt errechnet:

$$\alpha_s = 55{,}3 \cdot \frac{V}{(331 + 0{,}6 \cdot t) \cdot S} \cdot \left( \frac{1}{T_1} - \frac{1}{T_2} \right)$$

$\alpha_s$    Schallabsorptionsgrad [-]
V    Volumen des Hallraumes [m³]
t    Temperatur im Hallraum [°C]
S    Fläche des Prüfguts [m²]
$T_1$    Nachhallzeit im Hallraum ohne Prüfgut [s]
$T_2$    Nachhallzeit im Hallraum mit Prüfgut [s]

Die Messung der Nachhallzeit erfolgte mit Terzbandrauschen, welches über einen Lautsprecher im Hallraum abgestrahlt wurde.

Die Messung erfolgte bei gleichbleibender Lufttemperatur von 18°C und einer Luftfeuchtigkeit von 60% relativer Feuchte.

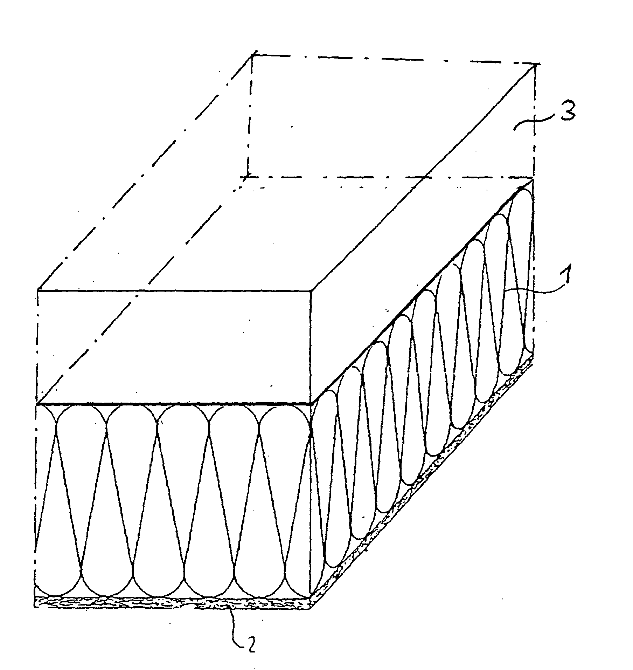

Als Mittel aus mehreren Meßreihen (12 zwischen 100 Hz bis 250 Hz, 9 zwischen 315 Hz bis 800 Hz, 6 zwischen 1000 Hz bis 3150 Hz) bei verschiedenen Mikrophon- und Lautsprecherstellungen ergaben sich die in Bild 1 dargestellten Werte des Schallabsorptionsgrades in Abhängigkeit von der Frequenz für die geprüften Verbundplatten.

Aus den Einzelwerten $\alpha_s$ für die Terzbänder mit den Terzmittelfrequenzen von 100 Hz bis 5000 Hz ist gemäß folgender Formel der Wert $\Delta L_{A,\alpha,Str}$ zur Kennzeichnung der Effektivität der Absorptionsschicht in Bezug auf Straßenverkehrsgeräusche zu errechnen:

$$\Delta L_{A,\Sigma,Str} = 10 \cdot \lg \frac{\Sigma k_i}{\Sigma k_i - \Sigma k_i \cdot \alpha_i} \text{ in dB.}$$

Die Faktoren $K_i$ ergeben sich aus der Frequenzzusammensetzung eines mittleren Straßenverkehrsgeräusches unter Berücksichtigung der A-Bewertung ; die für die Berechnung einzusetzenden Werte sind in folgender Tabelle aufgeführt:

| f [Hz] | 100 | 125 | 160 | 200 | 250 | 315 | 400 | 500 | 630 |
|--------|-----|-----|-----|-----|-----|-----|-----|-----|-----|
| K, | 1 | 2 | 3 | 4 | 5 | 7 | 9 | 11 | 15 |
| f [Hz] | 800 | 1 k | 1,5 k | 1,6 k | 2 k | 2,5 k | 3,15 k | 4 k | 5 k |
| $K_i$ | 21 | 29 | 32 | 26 | 20 | 15 | 10 | 5 | 3 |

Um den für den Kanteneffekt bedingten Fehler für den Wert $AL_{A,\alpha,Str}$ klein zu halten gilt, daß für $\alpha_i$ nur Werte ≤ 1 eingesetzt werden dürfen.

Die Berechnung des Kennwertes für die Schallabsorption ergab bei den geprüften Verbundplatten einen Wert von

$$\Sigma K_{i\alpha} = 201$$

Errechnet sich aus den $\alpha_i$-Werten für den $AL_{A,\alpha,Str}$ ein größerer Wert als 10, so wird nur $AL_{A,\alpha,Str} = 10$ angegeben.

Daraus folgt ein Wert:

$$AL_{A,\alpha,Str} = 10 \text{ dB}.$$

Entsprechend vorstehender Richlinien können die Verbundplatten demnach als "hochabsorbierend" eingestuft werden.


**Patentansprüche**

1.  Schallabsorbierende Verbund-Platte mit einer Fasermatte (1) und einer auf der Oberfläche der Fasermatte aufgeklebten Holzwolle-Dämmplatte (3), **gekennzeichnet durch** ein auf der anderen Oberfläche der Fasermatte aufgeklebtes Vlies (2).

2.  Verbundplatte nach Anspruch 1, **dadurch gekennzeichnet, daß** die Fasermatte (1) aus Mineralfasern besteht.

3.  Verbundplatte nach Anspruch 1, **dadurch gekennzeichnet, daß** die Holzwolle-Dämmplatte (3) eine mit einem magnesitischen Bindemittel gebundene Holzwolle-Dämmplatte ist.

4.  Verbundplatte nach Anspruch 1, **dadurch gekennzeichnet, daß** das Vlies (2) aus einem Glasvlies besteht.

5.  Verbundplatte nach Anspruch 1, **dadurch gekennzeichnet, daß** die Dicke der Fasermatte (1) 45-70%, die Dicke der Holzwolle-Dämmplatte (3) 25-50% und die Dicke des Vlieses (2) 1-8% der Gesamtdicke beträgt.

6.  Verbundplatte nach Anspruch 5, **dadurch gekennzeichnet, daß** die Dicke der Fasermatte (1) 53-62%, die Dicke der Holzwolle-Dämmplatte (3) 35-45% und die Dicke des Vlieses (2) 1-4% der Gesamtsdicke beträgt.

7.  Verbundplatte nach Anspruch 1, **gekennzeichnet durch** eine Gesamtdicke zwischen 35 und 50mm.

8.  Verbundplatte nach Anspruch 1, bei der die Holzwolle-Dämmplatte (3) und das Vlies (2) vollflächig auf der Fasermatte (1) verklebt sind.

9.  Anwendung der Verbundplatte nach einem der Ansprüche 1-8 als Schallabsorptionsplatte zwischen Eisenbahnschienen im Tunnelbereich.


**Claims**

1.  A sound-absorbing composite board with a fibre mat (1) and a wood wool insulating board (3) glued onto the surface of the fibre mat, **characterised by** a non-woven fabric (2) glued onto the other surface of the fibre mat.

2.  The composite board according to claim 1, **characterised in that** the fibre mat (1) is made of mineral fibres.

3.  The composite board according to claim 1, **characterised in that** the wood wool insulating board (3) is a wood wool insulating board bonded with a magnesitic bonder.

4.  The composite board according to claim 1, **characterised in that** the non-woven fabric (2) is made of a glass non-woven fabric.

5.  The composite board according to claim 1, **characterised in that** the thickness of the fibre mat (1) amounts to 45 - 70 %, the thickness of the wood wool insulating board (3) to 25 - 50 % and the thickness of the non-woven fabric (2) to 1 - 8 %.

6.  The composite board according to claim 5, **characterised in that** the thickness of the fibre mat (1) amounts to 53 - 62 %, the thickness of the wood wool insulating board (3) to 35 - 45 % and the thickness of the non-woven fabric (2) to 1 - 4 %.

7.  The composite board according to claim 1, **characterised by** a total thickness between 35 and 50 mm.

**EP 0 971 080 B1**

8. The composite board according to claim 1, wherein the wood wool insulating board (3) and the non-woven fabric (2) are glued on the fibre mat (1) over the whole surface.

9. A use of the composite board according to any one of claims 1 - 8 as a sound-absorption board between railway lines in the tunnel area.

**Revendications**

1. Panneau composite à absorption acoustique avec une natte de fibres (1) et avec un panneau isolant en laine de bois (3) collé sur la surface de la natte de fibres, **caractérisé par** un non-tissé (2) collé sur l'autre surface de la natte de fibres.

2. Panneau composite selon la revendication 1, **caractérisé en ce que** la natte de fibres (1) est en fibres minérales.

3. Panneau composite selon la revendication 1, **caractérisé en ce que** le panneau isolant en laine de bois (3) est un panneau isolant en laine de bois lié avec un liant à la magnésie.

4. Panneau composite selon la revendication 1, **caractérisé en ce que** le non-tissé (2) est un mat de fibres de verre.

5. Panneau composite selon la revendication 1, **caractérisé en ce que** l'épaisseur de la natte de fibres (1) vaut 45 à 70 % de l'épaisseur totale, l'épaisseur du panneau isolant en laine de bois (3) 25 à 50 % et l'épaisseur du non-tissé (2) 1 à 8 %.

6. Panneau composite selon la revendication 5, **caractérisé en ce que** l'épaisseur de la natte de fibres (1) vaut 53 à 62 % de l'épaisseur totale, l'épaisseur du panneau isolant en laine de bois (3) 35 à 45 % et l'épaisseur du non-tissé (2) 1 à 4 %.

7. Panneau composite selon la revendication 1, **caractérisé par** une épaisseur totale comprise entre 35 et 50 mm.

8. Panneau composite selon la revendication 1, tel que le panneau isolant en laine de bois (3) et le non-tissé (2) sont collés par toute leur surface sur la natte de fibres (1).

9. Utilisation du panneau composite selon l'une des revendications 1 à 8 comme panneau à absorption acoustique entre des rails ferroviaires dans une zone de tunnel.